(19) **Europäisches Patentamt**

**European Patent Office**

**Office européen des brevets**

(11) **EP 0 802 264 B1**

(12) **FASCICULE DE BREVET EUROPEEN**

(45) Date de publication et mention
de la délivrance du brevet:
**13.03.2002 Bulletin 2002/11**

(51) Int Cl.⁷: **C22C 16/00**

(21) Numéro de dépôt: **97400795.7**

(22) Date de dépôt: **07.04.1997**

(54) **Alliage à base de zirconium résistant au fluage et à la corrosion par l'eau et la vapeur, procédé de fabrication, et utilisation dans un réacteur nucléaire**

Kriechbeständige Legierung auf Zirkonium-Basis mit guter Korrosionsbeständigkeit gegen Wasser und Dampf, Herstellungsverfahren und Verwendung in einen Kernreaktor

Zirconium base alloy, resistant against creep and against corrosion by water and steam, manufacturing process and application in a nuclear reactor

(84) Etats contractants désignés:
**BE DE ES GB SE**

(30) Priorité: **16.04.1996 FR 9604739**

(43) Date de publication de la demande:
**22.10.1997 Bulletin 1997/43**

(73) Titulaire: **Compagnie Européenne du Zirconium CEZUS**
**92400 Courbevoie (FR)**

(72) Inventeurs:
• **Rebeyrolle, Véronique**
**74210 Savergettes (FR)**
• **Charquet, Daniel**
**73200 Albertville (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
**EP-A- 0 154 559**

## Description

L'invention concerne un alliage à base de zirconium pour la fabrication d'éléments utilisés dans un réacteur nucléaire et les éléments réalisés à partir de cet alliage.

Les alliages de zirconium sont des matériaux connus pour réaliser des éléments subissant, en service, les conditions régnant à l'intérieur du coeur d'un réacteur nucléaire. En particulier, de tels éléments en alliage de zirconium sont utilisés dans les réacteurs nucléaires refroidis par de l'eau légère tels que les réacteurs à eau pressurisée (REP) et les réacteurs à eau bouillante (REB). Les alliages de zirconium sont également utilisés dans des réacteurs refroidis par de l'eau lourde tels que les réacteurs de type CANDU. Les alliages de zirconium sont utilisés en particulier sous forme de tubes pour constituer des tubes-guides pour assemblage de combustible, des gaines de crayons de combustible qui sont remplies de pastilles de matériau combustible ou encore des gaines de grappes absorbantes. Ces alliages sont également utilisés sous la forme de produits plats tels que des tôles ou des feuillards pour constituer des éléments de structure des assemblages de combustible pour réacteur nucléaire.

Dans le cas des réacteurs refroidis par de l'eau lourde, les alliages de zirconium sont également utilisés pour constituer des boîtiers destinés à contenir des barreaux de combustible.

Ces alliages de zirconium renferment généralement au moins 96 % en poids de zirconium. Les principaux alliages utilisés sont l'alliage connu sous la dénomination Zircaloy 4 qui renferme, en poids, de 1,2 à 1,7 % d'étain, de 0,18 à 0,24 % de fer et de 0,07 à 0,13 % de chrome, l'alliage connu sous la dénomination Zircaloy 2 qui renferme, en poids, de 1,2 à 1,7 % d'étain, de 0,07 à 0,20 % de fer, de 0,05 à 0,15 % de nickel et de 0,05 à 0,15 % de chrome, un alliage renfermant du zirconium et 2,2 à 2,8 % en poids de niobium et un alliage renfermant du zirconium et 0,7 à 1,3 % en poids de niobium.

D'autres alliages de zirconium utilisés dans les réacteurs nucléaires présentent les compositions pondérales suivantes (compositions nominales) :

    Zr, 1 % Nb, 1 % Sn, 0,1 % Fe
    Zr, 0,5 % Nb, 0,65 % Fe, 0,5 % V
    Zr, 1 % Nb, 1,2 % Sn, 0,45 % Fe, 0,1 % Cr
    Zr, 0,5 % Sn, 0,45 % Fe, 0,1 % Cr
    Zr, 0,5 % Sn, 0,46 % Fe, 0,23 % Cr, 0,03 % Ni, 100 ppm Si.

Ces alliages de zirconium peuvent également renfermer une certaine quantité d'oxygène.

Ces alliages, qui sont utilisés pour réaliser des éléments disposés en service dans le coeur d'un réacteur nucléaire, doivent être faiblement neutrophages et présenter de bonnes caractéristiques mécaniques, en particulier à haute température, et une bonne résistance à la corrosion dans l'ambiance du réacteur nucléaire, par exemple pour limiter les risques de fissuration dans le cas des gaines de crayons de combustible.

Suivant les conditions régnant dans le coeur du réacteur nucléaire, différentes formes de corrosion peuvent se développer sur les éléments en alliage de zirconium, au contact d'eau ou de vapeur d'eau à haute température.

Dans le cas des réacteurs à eau pressurisée (REP), les éléments en alliage de zirconium sont principalement soumis à la corrosion uniforme alors que dans les réacteurs à eau bouillante (REB), ces alliages sont principalement soumis à la corrosion de type nodulaire.

Les alliages de zirconium utilisés le plus couramment, par exemple les alliages mentionnés précédemment, présentent des compositions et sont soumis à des traitements thermiques tels qu'ils puissent développer des caractéristiques mécaniques et une résistance aux différentes formes de corrosion suffisantes pour qu'ils puissent être utilisés dans les réacteurs nucléaires. De manière générale, les structures développées dans les alliages de zirconium le plus couramment utilisés sont indiquées ci-dessous.

Les Zircaloy 2 et 4 sont des alliages en phase $\alpha$ caractérisés par une précipitation d'intermétalliques dans une matrice de phase $\alpha$.

Les alliages contenant du niobium sont des alliages en phase $\alpha + \beta$ qui se caractérisent entre autres par une précipitation de phase $\beta$ dans une matrice de phase $\alpha$.

Dans le but d'améliorer la tenue des éléments en alliage de zirconium à l'intérieur du coeur des réacteurs nucléaires et donc d'allonger leur durée d'utilisation, on a cherché principalement à améliorer leur résistance aux différentes formes de corrosion, par des additions d'éléments d'alliage et par des traitements thermiques permettant d'affiner la structure de ces alliages. Les conditions d'élaboration, de transformation et de mise en forme de ces alliages doivent être adaptées à chaque type d'alliage utilisé. De ce fait, les processus industriels pour la fabrication des éléments en alliage de zirconium sont rendus plus complexes et plus coûteux. En outre, les améliorations obtenues en ce qui concerne la tenue à la corrosion sont rarement accompagnées d'améliorations concernant la résistance au fluage qui est un autre paramètre extrêmement important influant sur la tenue des éléments utilisés dans les réacteurs nucléaires.

D'autre part, les additions connues pour améliorer la tenue au fluage peuvent entraîner une dégradation de la tenue à la corrosion. Par exemple, il est connu que l'étain, qui améliore la tenue au fluage, dégrade la tenue à la corrosion uniforme des alliages de zirconium

Le but de l'invention comme il est défini dans la revendication 1, est donc de proposer un alliage à base de zirconium pour la fabrication d'éléments utilisés dans un réacteur nucléaire, résistant au fluage et à la corrosion par l'eau et la vapeur, cet alliage tout en présentant une composition de base analogue à celle d'un alliage de zirconium de type classique pouvant être mis en oeuvre par des procédés industriels connus, ayant une résistance au fluage et à la corrosion nettement améliorée.

Dans ce but, l'alliage suivant l'invention contient au moins 96 % en poids de zirconium, du soufre dans une proportion pondérale comprise entre 8 et 100 ppm (parties par million) ainsi qu'éventuellement l'un au moins des éléments étain, fer, chrome, nickel, oxygène, niobium, vanadium et silicium, le reste de l'alliage étant constitué par des impuretés inévitables.

Afin de bien faire comprendre l'invention, on va maintenant décrire, à titre d'exemple non limitatif, un alliage de zirconium suivant l'invention dont la composition de base, en dehors du soufre, correspond à la composition d'un alliage connu et ses caractéristiques de résistance au fluage et de résistance à la corrosion obtenues par des essais de type normalisé.

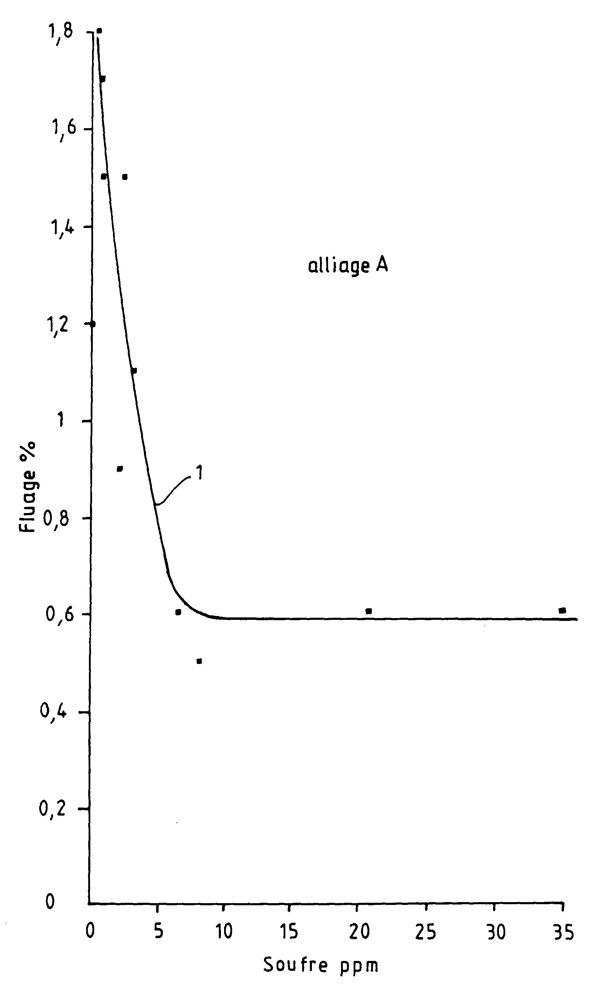

La figure unique est un diagramme représentatif de la tenue au fluage d'un alliage de zirconium en fonction de sa teneur en soufre.

Dans le cas des alliages à base de zirconium de type connu utilisés pour la réalisation d'éléments mis en oeuvre dans le coeur des réacteurs nucléaires, il n'existe pas de spécification concernant la teneur en soufre de ces alliages, le soufre étant considéré comme une impureté inévitable. De manière habituelle, on maintient cette teneur à une valeur inférieure à 2 ppm, ce faible taux de soufre contribuant à conférer aux alliages de zirconium leurs bonnes caractéristiques classiques de ductilité et de tenue à la corrosion sous contrainte.

Les recherches de la société déposante ont montré que, de manière surprenante, des additions de soufre en très faibles quantités, ces quantités étant toutefois supérieures aux teneurs habituelles des alliages de zirconium techniques de type classique, amélioraient substantiellement la tenue au fluage de ces alliages sans dégrader la tenue à la corrosion et même, que dans certains cas, des additions de soufre pouvaient augmenter la résistance de l'alliage à l'oxydation par de l'eau ou de la vapeur.

On va décrire ci-dessus les essais de fluage, puis les essais de corrosion effectués sur des alliages de zirconium ayant une teneur en soufre contrôlée.

Essais de fluage

a - Définition des essais

1 - On a effectué des essais de fluage sur des tubes soumis à une haute température et à une pression interne. On mesure la déformation circonférentielle du tube après 240 heures à 400°C sous une contrainte circonférentielle de 130 MPa. Ces essais seront désignés par la suite comme essais biaxés.

2 - On a également réalisé des essais sur des éprouvettes dont on mesure l'allongement dû au fluage après 240 heures à 400°C sous une contrainte de 110 MPa. Ces essais pourront être désignés par la suite comme essais en condition uni-axée.

b - Alliages de zirconium soumis aux essais

1 - On a étudié tout d'abord l'influence d'addition de soufre sur un alliage renfermant, outre le zirconium, 0,7 à 1,3 % en poids de niobium et 0,09 à 0,16 % en poids d'oxygène (alliage A). A cette composition de base, on ajouté du soufre de manière à réaliser des additions échelonnées permettant de réaliser des essais sur des alliages comportant une teneur en soufre croissante, depuis une teneur pratiquement nulle, jusqu'à une teneur de l'ordre de 35 ppm.

Le soufre a été ajouté sous forme de zircone soufrée à teneur contrôlée en soufre contenant entre 5000 et 15000 ppm de soufre. Le contrôle de la teneur en oxygène des alliages a été assuré par des ajouts complémentaires de zircone sensiblement exempte de soufre. Les additions de zircone contenant du soufre et de zircone exempte de soufre pour ajuster la teneur en soufre et en oxygène de l'alliage à des valeurs très précises sont effectuées dans une phase initiale de l'élaboration, au moment de la constitution de la charge qui est ensuite soumise à la fusion.

Les tubes en alliages de zirconium ont été fabriqués selon une gamme conventionnelle comportant

- un forgeage en phase β d'un lingot,
- une trempe des billettes obtenues depuis la phase β,
- un filage en phase α + β,
- quatre à cinq cycles de laminage suivis de recuits, les recuits étant effectués entre 580 et 700°C.

2 - On a également élaboré des alliages de zirconium renfermant, en poids 0,3 à 1,4 % d'étain, 0,4 à 1 % de fer, 0,2 à 0,7 % de vanadium ou de chrome entre 500 et 1800 ppm d'oxygène et des teneurs en soufre variables et croissantes depuis une teneur pratiquement nulle. Cet alliage (alliage B) a été mis sous forme d'éprouvettes tubulaires à l'état recristallisé pour essais de fluage biaxé, par le procédé de transformation conventionnel.

3 - On a également élaboré des alliages du type connu sous la dénomination Zircaloy 4 renfermant en poids, de 1,2 à 1,7 % d'étain, de 0,18 à 0,25 % de fer et de 0,07 à 0,13 % de chrome ainsi que des teneurs en soufre croissantes depuis une teneur pratiquement nulle. Ces alliages sont mis sous forme d'éprouvettes tubulaires à l'état détendu pour essais de fluage biaxé.

4 - On réalise également des éprouvettes de fluage pour essais de fluage uni-axé en alliage connu sous la dénomination Zircaloy 4 ayant subi un traitement de recristallisation.

Les alliages élaborés peuvent contenir également une certaine quantité d'oxygène.

c - Résultats des essais de fluage.

En ce qui concerne les essais de fluage biaxé sur les alliages A décrits dans le paragraphe 1 ci-dessus, on se reportera à la figure annexée qui est un diagramme donnant la déformation circonférentielle des tubes en %, en fonction de la teneur en soufre en ppm. La déformation circonférentielle est la déformation mesurée après un maintien de 240 heures à 400°C des tubes soumis à une contrainte circonférentielle de 130 MPa.

On voit que quelques ppm de soufre, au-delà des limites habituelles augmentent la tenue au fluage d'un facteur de 2 à 3. Par exemple, la résistance au fluage est pratiquement doublée pour une teneur en soufre passant de 2 à 5 ppm et triplée pour une teneur en soufre passant de 1 à 10 ppm.

En outre, à partir de 8 ppm à peu près, la courbe 1 représentant la résistance au fluage en fonction de la teneur en soufre présente un palier horizontal traduisant la saturation de l'amélioration de la tenue au fluage par addition de soufre.

En ce qui concerne les alliages B contenant de l'étain, du fer et du vanadium décrits dans le paragraphe 2, ci-dessus, l'allongement circonférentiel en fluage biaxé des éprouvettes passe de 2,3 à 1,2 %, lorsque la teneur en soufre passe de 2 à 14 ppm (résultat obtenu sur un alliage à 0,5 % Sn, 0,6 % Fe et 0,4 % V).

En ce qui concerne l'alliage connu sous la dénomination Zircaloy 4 détendu (paragraphe 3 ci-dessus), l'allongement circonférentiel en fluage biaxé passe de 1,8 à 1,6 %, lorsque le soufre passe de 2 à 9 ppm (résultat obtenu sur un alliage connu sous la dénomination Zircaloy 4 contenant 1,3 % Sn, 0,20 % Fe et 0,11 % Cr).

Les essais en fluage uni-axé sur les éprouvettes en alliage connu sous la dénomination Zircaloy 4 recristallisé ont montré que l'allongement dû au fluage passe de 4 à 2,2 % pour des teneurs en soufre passant de 2 à 18 ppm, respectivement (résultat obtenu sur un alliage connu sous la dénomination Zircaloy 4 contenant 1,3 % Sn, 0,20 % Fe et 0,11 % Cr).

Les essais de fluage ont donc montré que le soufre, dans des teneurs faibles mais supérieures aux teneurs habituelles des alliages de zirconium techniques connus renforce de manière importante la matrice de zirconium. Cet effet a été observé aussi bien en ce qui concerne les alliages en phase α que les alliages en phase α + β.

Essais de corrosion

a - Essais effectués sur les alliages utilisés pour les essais de fluage.

On a réalisé un essai de corrosion, en soumettant les alliages utilisés pour les essais de fluage à de la vapeur d'eau à une température de 400°C, pendant une durée de 3 jours. On mesure le gain de masse des échantillons à l'issue de l'essai. L'essai correspondant à l'essai normalisé ASTM G II a montré que les alliages ont une tenue à la corrosion qui est au moins aussi bonne que les alliages de type classique ne renfermant du soufre qu'à titre d'élément résiduel inférieur à 2 ppm. Il a donc été prouvé que le soufre n'a pas d'influence néfaste sur la tenue à la corrosion uniforme des alliages de zirconium, du type observé dans les réacteurs à eau sous pression.

b - Essais de corrosion de type nodulaire et de type uniforme sur des alliages de zirconium contenant jusqu'à 100 ppm de soufre.

On a réalisé des essais de corrosion sur des alliages de zirconium du type connu sous la dénomination Zircaloy 4, du type connu sous la dénomination Zircaloy 2, sur un alliage contenant en poids 0,7 à 1,3 % de niobium, 0,8 à 1,5 % d'étain, 0,1 à 0,6 % de fer, de 0,01 à 0,2 % de chrome et de 500 à 1800 ppm d'oxygène et sur un alliage complexe renfermant en poids 0,7 à 1,25 % d'étain, 0,1 à 0,3 % de fer, 0,05 à 0,2 % de chrome, 0,1 à 0,3 % de niobium, 0,01 à 0,02 % de nickel et de 500 à 1800 ppm d'oxygène auquel on a ajouté du soufre de manière que la teneur de l'alliage soit comprise entre 0 et 100 ppm.

Les additions de soufre ont été effectuées sous la forme soit de sulfure de fer soit de sulfure d'étain, dans des échantillons en forme de boutons d'une masse de 150 g réalisés à partir des différentes nuances données ci-dessus.

Dans tous les cas, le rendement en soufre de l'opération d'addition, c'est-à-dire le rapport entre le soufre introduit dans la charge des matières premières et le soufre analysé après fusion était proche de 100 %. Les teneurs en soufre des différents échantillons utilisés sont donc connues de manière très précise.

Les boutons en alliage de zirconium contenant du soufre ont été transformés en produits plats tels que des tôles ou feuillards, selon une gamme classique de production comprenant :

- une trempe depuis la phase β,
- un laminage à chaud entre 650 et 750°C,
- deux cycles de laminage à froid suivis par un recuit.

Les essais de corrosion effectués sont les suivants :

1°- Pour mesurer la résistance à la corrosion nodulaire telle qu'observée dans les réacteurs à eau bouillante, on maintient les échantillons 24 heures à 500° en contact avec de la vapeur d'eau sous une contrainte de 10,3 MPa.
2°- Pour mesurer la résistance à la corrosion uniforme telle que rencontrée dans les réacteurs à eau sous pression, on maintient les échantillons pendant des durées variable, à 400°, en contact avec de la vapeur d'eau, sous une contrainte de 10,3 MPa.

Les résultats des essais sont les suivants :

- En ce qui concerne l'alliage connu sous la dénomination Zircaloy 2, l'alliage à 1 % de niobium et l'alliage contenant du vanadium, on n'a pas décelé d'influence significative des additions de soufre jusqu'à 100 ppm, soit sur la tenue à la corrosion nodulaire, soit sur la tenue à la corrosion uniforme.

En revanche, comme il ressort en particulier du tableau 1 donné ci-dessous, relatif à des échantillons de l'alliage connu sous la dénomination Zircaloy 4 auquel du soufre a été ajouté en proportions variables sous forme de sulfure d'étain SnS, on a pu observer une influence bénéfique du soufre. Cette influence est particulièrement remarquable, dans le cas où la gamme de traitement de l'alliage n'est pas optimisée pour que l'alliage résiste simultanément aux deux formes de corrosion nodulaire et uniforme.

Dans le tableau 1, le paramètre de traitement thermique ΣA est défini par la formule :

$$\Sigma A = t.\exp(-40000/T)$$

où t est le temps de traitement en heures et T la température de traitement en degré Kelvin.

TABLEAU 1

| Teneur en Soufre en ppm | Gain de masse en mg/dm$^2$ | |
|---|---|---|
| | Tôle de 1,5 mm recuite 2h 40 min à 650°C $\Sigma A = 4,8.10^{-18}$ | |
| | 24 h à 500°C | 260 j à 400°C |
| 3 | 400 | 226 |

TABLEAU 1   (suite)

| Teneur en Soufre en ppm | Gain de masse en mg/dm$^2$ | |
|---|---|---|
| | Tôle de 1,5 mm recuite 2h 40 min à 650°C $\Sigma A = 4,8.10^{-18}$ | |
| | 24 h à 500°C | 260 j à 400°C |
| 22 | 180 | 244 |
| 38 | 110 | 173 |
| 69 | 140 | 178 |
| 80 | 78 | 173 |

En effet, l'alliage connu sous la dénomination Zircaloy 4 résiste bien à la corrosion nodulaire dans le cas de gammes de traitement se traduisant par un $\Sigma A < 10^{-19}$ et il résiste bien à la corrosion uniforme pour $\Sigma A > 10^{-17}$. Il est connu également que des valeurs de $\Sigma A$ intermédiaires conduisent parfois à des comportements très aléatoires en ce qui concerne l'une ou l'autre des formes de corrosion.

Dans le cas des essais de corrosion dont les résultats sont donnés dans le tableau 1, on a utilisé des éprouvettes en tôle de 1,5 mm d'épaisseur recuites pendant 2 heures 40 minutes à 650° ; le $\Sigma A$ est de 4,8 10$^{-18}$.

Les essais de corrosion nodulaire de 24 heures à 500°C correspondent au cas d'un réacteur bouillant et les essais en corrosion uniforme de 260 jours à 400°C correspondent aux conditions d'un réacteur à eau sous pression.

Pour des teneurs en soufre de 3, 22, 38, 69 et 80 ppm, on observe dans les deux cas, pratiquement, des gains de masse en mg/dm$^2$ de l'éprouvette, qui sont décroissants.

En outre, le tableau 1 montre que le soufre en améliorant à la fois la tenue aux deux formes de corrosion aide au compromis entre une bonne tenue des alliages à la corrosion uniforme et une bonne tenue à la corrosion nodulaire.

C - Essais de corrosion sur des alliages connus sous la dénomination Zircaloy 4 renfermant plus de 100 ppm de soufre.

1 - Préparation d'échantillons en alliage connu sous la dénomination Zircaloy 4

Six nuances de l'alliage connu sous la dénomination Zircaloy 4 à teneur en soufre variant d'un peu moins de 10 ppm à 310 ppm ont été élaborées et leur composition est indiquée dans le tableau 2 ci-après.

TABLEAU 2

| Ref. Nuance | Sn % | Fe ppm | Cr ppm | Si ppm | S ppm |
|---|---|---|---|---|---|
| 1 (témoin) | 1,56 | 2216 | 974 | 15 | < 10 |
| 2 | 1,42 | 2088 | 954 | 13 | 15 |
| 3 | 1,53 | 2336 | 1098 | 17 | 35 |
| 4 | 1,50 | 2383 | 896 | 15 | 97 |
| 5 | 1,43 | 2228 | 1007 | 12 | 102 |
| 6 | 1,42 | 2098 | 987 | 15 | 310 |

Six boutons de 150 g ont été préparés après trois fusions successives à l'arc sous argon des matières premières suivantes : fer pur, chrome pur, copeaux de zirconium, alliage SnFeCr avec addition de soufre sous forme de sulfure de fer pour les nuances ayant les références 2, 3, 4, 5 et 6 sur le tableau 2.

Les boutons ont été transformés en tôle selon une gamme classique de transformation comprenant :

- un préchauffage à 1050°C pendant 10 minutes suivi d'une trempe à l'eau,
- un laminage à 760°C jusqu'à une épaisseur de 7 mm,
- un décalaminage et un décapage,
- un laminage à froid pour calibrage à 6 mm,
- un recuit sous vide à 650°C pendant deux heures,

- un décapage,
- un laminage à froid jusqu'à une épaisseur de 3 mm.

On prélève par découpage, pour chaque nuance de tôle écrouie par le laminage à froid, au moins une plaquette par nuance, c'est-à-dire au moins six plaquettes pour effectuer des essais de corrosion uniforme (essai A) d'une durée de 140 jours. Cinq plaquettes sont repérées sur le tableau de résultats (tableau 3) sous les références (1A, 2A, 3A, 4A et 5A).

TABLEAU 3

| N° Référence | Teneur en soufre ppm | épaisseur tôle en mm | Etat métallurgique | Durée essai en jours | Gain de poids en mg/dm$^2$ |
|---|---|---|---|---|---|
| Essais de corrosion dans la vapeur d'eau à 400°C | | | | | |
| 1A | < 10 | 3 | Ecroui | 140 | 186 |
| 2A | 15 | " | " | " | 160 |
| 3A | 35 | " | " | " | 131 |
| 4A | 97 | " | " | " | 125 |
| 5A | 102 | " | " | " | 117 |
| 1B | < 10 | 1,5 | Ecroui | 85 | 375 |
| 2B | 15 | " | " | " | 567 |
| 3B | 35 | " | " | " | 93 |
| 4B | 97 | " | " | " | 84 |
| 5B | 102 | " | " | " | 79 |
| 1C | < 10 | 1,5 | Restauré | 85 | 315 |
| 2C | 15 | " | " | " | 189 |
| 3C | 35 | " | " | " | 89 |
| 4C | 97 | " | " | " | 75 |
| 5C | 102 | " | " | " | 69 |

On poursuit la gamme de traitement des tôles par les opérations suivantes :

- un recuit sous vide à 650° pendant deux heures d'une tôle de 3 mm suivi d'un décapage,
- un laminage à froid jusqu'à 1,5 mm.

On prélève dans chaque nuance de tôle écrouie par le laminage à froid, au moins une plaquette soit au total au moins six plaquettes pour essai de corrosion uniforme (essai B) d'une durée de 85 heures.
Cinq plaquettes sont repérées sous les références 1B, 2B, 3B, 4B et 5B sur le tableau 3.
On poursuit le cycle de traitement par le traitement suivant :

- un recuit sous vide à 500° pendant deux heures.

On prélève dans chaque nuance de tôle ainsi restaurée par recuit sous vide six plaquettes pour essai de corrosion uniforme (essai C) d'une durée de 85 heures.
Cinq plaquettes sont repérées 1C, 2C, 3C, 4C et 5C sur le tableau 3.
On effectue enfin un recuit de recristallisation des parties de tôle restantes à 650°C sous vide pendant 2 heures.
On effectue sur les parties de tôle restantes un essai D de corrosion nodulaire.
Quatre plaquettes prélevées pour cet essai sont repérées 1D, 2D, 3D et 4D.
Les résultats des essais sont indiqués sur les tableaux 3 et 4.

TABLEAU 4

| N° référence | Teneur en soufre ppm | épaisseur de tôle mm | état métallurgique | gain de poids en mg/dm$^2$ |
|---|---|---|---|---|
| Essais de corrosion de 24 heures dans la vapeur d'eau à 500°C | | | | |
| 1D | < 10 | 1,5 | " | 425 |

TABLEAU 4   (suite)

| Essais de corrosion de 24 heures dans la vapeur d'eau à 500°C | | | | |
|---|---|---|---|---|
| N° référence | Teneur en soufre ppm | épaisseur de tôle mm | état métallurgique | gain de poids en mg/dm$^2$ |
| 2D | 15 | " | " | 510 |
| 3D | 35 | " | " | 270 |
| 4D | 97 | " | " | 156 |

Dans tous les cas, on mesure le gain de poids de l'échantillon en mg/dm$^2$.

On constate une amélioration simultanée de la résistance à la corrosion uniforme et de la résistance à la corrosion nodulaire des échantillons dont la teneur en soufre augmente depuis une valeur inférieure à 10 ppm jusqu'à une valeur voisine de 100 ppm. Au voisinage de 1a valeur de 100 ppm de soufre, il se produit une saturation de l'effet d'amélioration de la tenue à la corrosion uniforme ou à la corrosion nodulaire, puis, au-dessus de 100 ppm de soufre, jusqu'à la valeur maximale de 310 ppm, une diminution variable et présente dans tous les échantillons de la tenue à la corrosion uniforme et à la corrosion nodulaire. Les valeurs des gains de masse des échantillons pour des teneurs en soufre de 310 ppm n'ont pas été reportées sur les tableaux. Dans certains cas, la tenue à la corrosion diminue jusqu'à un niveau proche du niveau de départ.

En outre, l'effet de la teneur en soufre sur l'amélioration de la tenue à la corrosion devient importante aux alentours d'une teneur en soufre sensiblement égale à 30 ppm.

Pour définir les alliages suivant l'invention qui présentent une composition de base analogue à celle d'un alliage technique de zirconium connu et qui ont de plus une teneur pondérale en soufre comprise entre 8 et 100 ppm, on a pris en compte les éléments qui seront indiqués ci-dessous.

La teneur en soufre doit être fixée à la valeur la plus faible permettant d'obtenir à la fois une augmentation optimale de la tenue au fluage et des tenues à la corrosion uniforme et nodulaire au moins égales à celle de l'alliage technique connu présentant la composition de base de l'alliage suivant l'invention. On a donc choisi la valeur de 8 ppm qui correspond à la valeur à laquelle l'effet bénéfique sur la tenue au fluage des alliages de zirconium se sature, cette valeur de 8 ppm étant d'autre part suffisamment élevée pour pouvoir être dosée de manière précise.

On a choisi comme valeur maximale de l'intervalle 100 ppm dans la mesure où cette valeur correspond à la valeur de la teneur en soufre pour laquelle l'élévation de la tenue à la corrosion se sature. En outre, on a vérifié que les caractéristiques de ductilité et de corrosion sous contrainte des alliages de zirconium restent satisfaisantes pour des teneurs en soufre inférieures à 100 ppm.

Cependant, dans la mesure où un effet important est déjà obtenu pour la tenue à la corrosion aux alentours de 30 ppm, un intervalle préférentiel pour la teneur en soufre sera compris entre 8 et 30 ppm. On limite ainsi tout effet indésirable du soufre sur les caractéristiques mécaniques et de formabilité de l'alliage de zirconium.

En particulier, l'invention s'applique à un alliage de zirconium renfermant en poids de 0,3 à 0,7 % d'étain, de 0,3 à 0,7 % de fer, de 0,1 à 0,4 % de chrome, de 0,01 à 0,04 % de nickel, de 70 à 120 ppm de silicium et de 500 à 1800 ppm d'oxygène.

Un exemple d'un tel alliage est l'alliage contenant 0,5 % d'étain, 0,46 % de fer, 0,23 % de chrome, 0,003 % de nickel et 100 ppm de silicium, mentionné plus haut.

**Revendications**

1.   Alliage à base de zirconium pour la fabrication d'éléments utilisés dans un réacteur nucléaire, résistant au fluage et à la corrosion par l'eau et la vapeur, **caractérisé par le fait qu'**il contient au moins un élément d'addition constitué par du soufre dans une proportion pondérale de 8 à 100 ppm ainsi qu'éventuellement, l'un au moins des éléments d'addition complémentaire étain, fer, chrome, nickel, oxygène, niobium, vanadium et silicium, l'ensemble des éléments d'addition représentant au maximum 4 % en poids de l'alliage, le reste de l'alliage étant constitué par du zirconium, à l'exception d'impuretés éventuelles.

2.   Alliage suivant la revendication 1, **caractérisé par le fait qu'**il contient du soufre dans une proportion pondérale comprise entre 8 et 30 ppm.

3.   Alliage suivant l'une quelconque des revendications 1 et 2, **caractérisé par le fait qu'**il contient, en plus du zirconium et du soufre, 1,2 à 1,7 % en poids d'étain, 0,18 à 0,25 % en poids de fer et 0,07 à 0,13 % de chrome.

4.   Alliage suivant l'une quelconque des revendications 1 et 2, **caractérisé par le fait qu'**il contient, en plus du zirconium et du soufre, de 1,2 à 1,7% en poids d'étain, de 0,07 à 0,20 % de fer, de 0,05 à 0,15 % de nickel et de 0,05 à 0,15 % de chrome.

**5.** Alliage suivant l'une quelconque des revendications 1 et 2, **caractérisé par le fait qu'**il contient, en plus du zirconium et du soufre, 0,7 à 1,3 % en poids de niobium et 0,09 à 0,16 % en poids d'oxygène.

**6.** Alliage suivant l'une quelconque des revendications 1 et 2, **caractérisé par le fait qu'**il contient, en plus du zirconium et du soufre, 0,3 à 1,4 % en poids d'étain, 0,4 à 1 % en poids de fer, 0,2 à 0,7 % en poids de vanadium ou de chrome et entre 500 et 1800 ppm d'oxygène.

**7.** Alliage suivant l'une quelconque des revendications 1 et 2, **caractérisé par le fait qu'**il contient, en plus du zirconium et du soufre, 0,7 à 1,3 % en poids de niobium, 0,8 à 1,5 % en poids d'étain et 0,1 à 0,6 % en poids de fer, de 0,01 à 0,2 % en poids de chrome et de 500 à 1800 ppm d'oxygène.

**8.** Alliage suivant l'une quelconque des revendications 1 et 2, **caractérisé par le fait qu'**il contient, en plus du zirconium et du soufre, 0,7 à 1,25 % en poids d'étain, 0,1 à 0,3 % en poids de fer, 0,05 à 0,2 % en poids de chrome, 0,1 à 0,3 % en poids de niobium et 0,01 à 0,02 % en poids de nickel et de 500 à 1800 ppm d'oxygène.

**9.** Alliage suivant l'une quelconque des revendications 1 et 2, **caractérisé par le fait qu'**il contient 2,2 à 2,8 % en poids de niobium.

**10.** Alliage suivant l'une quelconque des revendications 1 et 2, **caractérisé par le fait qu'**il contient en poids de 0,3 à 0,7 % d'étain, de 0,3 à 0,7 % de fer, de 0,1 à 0,4 % de chrome, de 0,01 à 0,04 % de nickel et de 70 à 120 ppm de silicium et de 500 à 1800 ppm d'oxygène.

**11.** Utilisation d'un alliage suivant l'une quelconque des revendications 1 à 10, pour la fabrication d'un tube de gainage pour crayon de combustible.

**12.** Utilisation d'un alliage suivant l'une quelconque des revendications 1 à 10, pour la fabrication d'un élément de structure d'un assemblage de combustible et en particulier d'un tube-guide.

**13.** Utilisation d'un alliage suivant l'une quelconque des revendications 1 à 10, pour la fabrication d'un boîtier destiné à contenir un faisceau de barreaux de combustible.

**14.** Procédé d'élaboration d'un alliage à base de zirconium selon l'une quelconque des revendications 1 à 10, **caractérisé par le fait qu'**on ajoute à la composition de base de l'alliage, au moment de la constitution d'une charge soumise à une fusion, de la zircone contenant du soufre et éventuellement de la zircone exempte de soufre.

**15.** Procédé d'élaboration d'un alliage à base de zirconium selon l'une quelconque des revendications 1 à 10, **caractérisé par le fait qu'**on ajoute à la composition de base de l'alliage l'un au moins des composés suivants : sulfure d'étain, sulfure de fer.

**Claims**

**1.** A zirconium-base alloy for the production of components used in a nuclear reactor, which is resistant to creep and to corrosion by water and steam, **characterised in that** it contains at least one additive element formed by sulphur in a proportion by weight of from 8 to 100 ppm and optionally one at least of the supplementary additive elements tin, iron, chromium, nickel, oxygen, niobium, vanadium and silicon, the whole of the additive elements representing at a maximum 4% by weight of the alloy, the balance of the alloy being formed by zirconium except for possible impurities.

**2.** An alloy according to claim 1 **characterised in that** it contains sulphur in a proportion by weight of between 8 and 30 ppm.

**3.** An alloy according to either one of claims 1 and 2 **characterised in that** in addition to zirconium and sulphur it contains from 1.2 to 1.7% by weight of tin, from 0.18 to 0.25% by weight of iron and from 0.7 to 0.13% of chromium.

4. An alloy according to either one of claims 1 and 2 **characterised in that** in addition to zirconium and sulphur it contains from 1.2 to 1.7% by weight of tin, from 0.07 to 0.20% of iron, from 0.05 to 0.15% of nickel and from 0.05 to 0.15% of chromium.

5. An alloy according to either one of claims 1 and 2 **characterised in that** in addition to zirconium and sulphur it contains from 0.7 to 1.3% by weight of niobium, and from 0.09 to 0.16% by weight of oxygen.

6. An alloy according to either one of claims 1 and 2 **characterised in that** in addition to zirconium and sulphur it contains from 0.3 to 1.4% by weight of tin, from 0.4 to 1% by weight of iron, from 0.2 to 0.7% by weight of vanadium or chromium and between 500 and 1800 ppm of oxygen.

7. An alloy according to either one of claims 1 and 2 **characterised in that** in addition to zirconium and sulphur it contains from 0.7 to 1.3% by weight of niobium, from 0.8 to 1.5% by weight of tin and from 0.1 to 0.6% by weight of iron, from 0.01 to 0.2% by weight of chromium and from 500 to 1800 ppm of oxygen.

8. An alloy according to either one of claims 1 and 2 **characterised in that** in addition to zirconium and sulphur it contains from 0.7 to 1.25% by weight of tin, from 0.1 to 0.3% by weight of iron, from 0.05 to 0.2% by weight of chromium, from 0.1 to 0.3% by weight of niobium and from 0.01 to 0.02% by weight of nickel and from 500 to 1800 ppm of oxygen.

9. An alloy according to either one of claims 1 and 2 **characterised in that** it contains from 2.2 to 2.8% by weight of niobium.

10. An alloy according to either one of claims 1 and 2 **characterised in that** it contains by weight from 0.3 to 0.7% of tin, from 0.3 to 0.7% of iron, from 0.1 to 0.4% of chromium, from 0.01 to 0.04% of nickel and from 70 to 120 ppm of silicon and from 500 to 1800 ppm of oxygen.

11. Use of an alloy according to any one of claims 1 to 10 for the production of a sheathing tube for a fuel rod.

12. Use of an alloy according to any one of claims 1 to 10 for the production of a structural element of a fuel assembly and in particular a guide tube.

13. Use of an alloy according to any one of claims 1 to 10 for the production of a case intended to contain a bundle of fuel pins.

14. A process for the manufacture of a zirconium-base alloy according to any one of claims 1 to 10 **characterised in that** zirconia containing sulphur and optionally zirconia which is free of sulphur is added to the base composition of the alloy at the moment of constituting a charge which is subjected to a melting procedure.

15. A process for the manufacture of a zirconium-base alloy according to any one of claims 1 to 10 **characterised in that** one at least of the following compounds: tin sulphide and iron sulphide is added to the base composition of the alloy.

**Patentansprüche**

1. Kriechbeständige und gegenüber Wasser und Dampf korrosionsbeständige Legierung auf Zirconium-Basis für die Herstellung von Elementen, die in einem Kernreaktor verwendet werden, **dadurch gekennzeichnet, dass** sie mindestens ein aus Schwefel bestehendes Zusatzelement in einem Gewichtsanteil von 8 bis 100 ppm sowie ggf. mindestens eines der Ergänzungszusatzelemente Zinn, Eisen, Chrom, Nickel, Sauerstoff, Niob, Vanadium und Silicium enthält, wobei die Gesamtheit der Zusatzelemente maximal 4 Gew.-% der Legierung darstellt und der Rest der Legierung, abgesehen von ggf. vorhandenen Verunreinigungen, aus Zirconium besteht.

2. Legierung nach Anspruch 1, **dadurch gekennzeichnet, dass** sie Schwefel in einem Gewichtsanteil zwischen 8 und 30 ppm enthält.

3. Legierung nach einem der Ansprüche 1 und 2, **dadurch gekennzeichnet, dass** sie zusätzlich zu Zirconium und Schwefel 1,2 bis 1,7 Gew.-% Zinn, 0,18 bis 0,25 Gew.-% Eisen und 0,07 bis 0,13 Gew.-% Chrom enthält.

**4.** Legierung nach einem der Ansprüche 1 und 2, **dadurch gekennzeichnet, dass** sie zusätzlich zu Zirconium und Schwefel 1,2 bis 1,7 Gew.-% Zinn, 0,07 bis 0,20 Gew.-% Eisen, 0,05 bis 0,15 Gew.-% Nickel und 0,05 bis 0,15 Gew.-% Chrom enthält.

**5.** Legierung nach einem der Ansprüche 1 und 2, **dadurch gekennzeichnet, dass** sie zusätzlich zu Zirconium und Schwefel 0,7 bis 1,3 Gew.-% Niob und 0,09 bis 0,16 Gew.-% Sauerstoff enthält.

**6.** Legierung nach einem der Ansprüche 1 und 2, **dadurch gekennzeichnet, dass** sie zusätzlich zu Zirconium und Schwefel 0,3 bis 1,4 Gew.-% Zinn, 0,4 bis 1 Gew.-% Eisen, 0,2 bis 0,7 Gew.-% Vanadium oder Chrom und zwischen 500 und 1800 ppm Sauerstoff enthält.

**7.** Legierung nach einem der Ansprüche 1 und 2, **dadurch gekennzeichnet, dass** sie zusätzlich zu Zirconium und Schwefel 0,7 bis 1,3 Gew.-% Niob, 0,8 bis 1,5 Gew.-% Zinn und 0,1 bis 0,6 Gew.-% Eisen, 0,01 bis 0,2 Gew.-% Chrom und 500 bis 1800 ppm Sauerstoff enthält.

**8.** Legierung nach einem der Ansprüche 1 und 2, **dadurch gekennzeichnet, dass** sie zusätzlich zu Zirconium und Schwefel 0,7 bis 1,25 Gew.-% Zinn, 0,1 bis 0,3 Gew.-% Eisen, 0,05 bis 0,2 Gew.-% Chrome, 0,1 bis 0,3 Gew.-% Niob und 0,01 bis 0,02 Gew.-% Nickel und 500 bis 1800 ppm Sauerstoff enthält.

**9.** Legierung nach einem der Ansprüche 1 und 2, **dadurch gekennzeichnet, dass** sie 2,2 bis 2,8 Gew.-% Niob enthält.

**10.** Legierung nach einem der Ansprüche 1 und 2, **dadurch gekennzeichnet, dass** sie, bezogen auf das Gewicht, 0,3 bis 0,7 % Zinn, 0,3 bis 0,7 % Eisen, 0,1 bis 0,4 % Chrom, 0,01 bis 0,04 % Nickel und 70 bis 120 ppm Silicium und 500 bis 1800 ppm Sauerstoff enthält.

**11.** Verwendung einer Legierung nach einem der Ansprüche 1 bis 10 für die Herstellung eines Hüllrohrs für einen Brennstab.

**12.** Verwendung einer Legierung nach einem der Ansprüche 1 bis 10 für die Herstellung eines Strukturelements einer Brennstoffkassette und insbesondere eines Führungsrohrs.

**13.** Verwendung einer Legierung nach einem der Ansprüche 1 bis 10 für die Herstellung eines Gehäuses, das für die Aufnahme eines Bündels von Brennstäben bestimmt ist.

**14.** Verfahren zur Herstellung einer Legierung auf Zirconium-Basis nach einem der Ansprüche 1 bis 10, **dadurch gekennzeichnet, dass** man der Basiszusammensetzung der Legierung zum Zeitpunkt der Bildung einer einer Schmelzung unterzogenen Charge Schwefel enthaltende Zirkonerde und ggf. Zirkonerde ohne Schwefel zugibt.

**15.** Verfahren zur Herstellung einer Legierung auf Zirconium-Basis nach einem der Ansprüche 1 bis 10, **dadurch gekennzeichnet, dass** man der Basiszusammensetzung der Legierung mindestens eine der folgenden Verbindungen zugibt: Zinnsulfid, Eisensulfid.